# EUROPEAN PATENT APPLICATION

(11) **EP 4 751 805 A1**
(43) Date of publication of application: **03.06.2026**
(21) Application number: 24215993.7
(22) Date of filing: 28.11.2024
(51) Int. Cl.: B01J 23/22, B01D 53/94, B01J 21/06, B01J 35/80, B01J 37/02, B01J 37/03, B01J 37/04, B01J 37/08, B01J 37/12, F01N 3/20

(54) **VANADIUM-CONTAINING SCR CATALYST AND METHOD FOR ITS PREPARATION**

(71) Applicant: Johnson Matthey Public Limited Company, London EC2V 7AD (GB)
(72) Inventor: THOMPSETT, David, Reading, RG4 9NH (GB); VILLAMAINA, Roberta, Reading, RG4 9NH (GB)
(74) Representative: Johnson Matthey Public Limited Company

(57) **Abstract**

This invention relates to a method for making a selective catalytic reduction catalyst, a catalyst article made according to the method and the use of the catalyst article in the selective catalytic reduction of NOₓ. The invention specifically relates to a method for producing a catalyst for the selective catalytic reduction of NOₓ in a gas mixture, the method comprising the steps of preparing a slurry comprising vanadium (V), antimony (Sb) and a reactive media, such as a hydrogen peroxide solution, to form a colloidal sol of VSbO₄; combining the colloidal sol of VSbO₄ with a catalyst support material, such as titania, to form a mixture; and optionally drying and calcining the resulting mixture.

## Description

### FIELD OF THE INVENTION

This invention relates to a method for making a selective catalytic reduction catalyst, a catalyst article made according to the method and the use of the catalyst article in the selective catalytic reduction of NOₓ.

### BACKGROUND

Hydrocarbon combustion in diesel engines, stationary gas turbines, and other systems generates exhaust gas that must be treated to remove nitrogen oxides (NOₓ), which comprises NO (nitric oxide) and NO₂ (nitrogen dioxide), with NO being the majority of the NOₓ formed. NOₓ is known to cause several health issues in people as well as causing several detrimental environmental effects including the formation of smog and acid rain. To mitigate both the human and environmental impact from NOₓ in exhaust gas, it is desirable to eliminate these undesirable components, preferably by a process that does not generate other noxious or toxic substances.

Exhaust gas generated in lean-burn and diesel engines is generally oxidative. NOₓ needs to be reduced selectively with a catalyst and a reductant in a process known as selective catalytic reduction (SCR) that converts NOₓ into elemental nitrogen (N₂) and water.

In an SCR process, a gaseous reductant, typically anhydrous ammonia, aqueous ammonia, or urea, is added to an exhaust gas stream prior to the exhaust gas contacting the catalyst. The reductant is absorbed onto the catalyst and the NOₓ is reduced as the gases pass through or over the catalyzed substrate.

The reduction reaction may be described as follows:

4NH₃+4NO+O₂→4N₂+6H₂O

In order to maximize the conversion of NOₓ, it is often necessary to add more than a stoichiometric amount of ammonia (NH₃) to the gas stream. It will be appreciated that the more efficient the conversion of NOₓ, the less ammonia (NH₃) remains unreacted (i.e. ammonia slippage is reduced). The release of unreacted ammonia into the atmosphere is detrimental to the health of people and to the environment. In addition, ammonia is caustic, especially in its aqueous form. Condensation of ammonia and water in regions of the exhaust line downstream of the exhaust catalysts can result in a corrosive mixture that can damage the exhaust system. Therefore, the release of ammonia in exhaust gas should be minimised as far as possible.

It is known that promoted vanadium antimony oxide (VSbOₓ) catalysts may be used for the ammoxidation of hydrocarbons to produce nitriles. US 4 784 979 (US '979) discloses a method of making a catalyst precursor by reacting the ion VO(O₂)⁺ in aqueous solution with an antimony compound that contains Sb having a valence of 3. In one embodiment, the VO(O₂)⁺ ion is made by reacting H₂O₂ with a vanadium compound. US '979 further discloses the making of such a catalyst by drying and calcining the precursor of the invention. The catalyst is stated to be useful for ammoxidation of propane.

Supported promoted VSbOₓ catalysts are also known as is their use as selective reduction catalysts for NOₓ. However, these are often made by mixing the vanadium source, antimony source and support together (e.g., US2023/0077366), or by adding soluble V and Sb salts to the support, drying and calcining (e.g., US 1172074). WO2017101449 discloses a catalyst composition prepared by slurrying V₂O₅ and SbOₐ in water, spray drying and reslurrying in water, to which TiO₂ and a Si binder are added. VSbO₄ is only formed after the combined mixture of V₂O₅, SbO₃ and TiO₂ is calcined.

The present inventors have surprisingly found that preforming VSbO₄ and then depositing it on a support produces a catalyst with improved SCR performance at equivalent V loading or similar performance with thrifted V loadings, as well as improving activity, selectivity and/or durability.

### OBJECT OF THE INVENTION

The object of the invention is to provide an alternate and novel method for making a catalyst article comprising a selective catalytic reduction VSbOₓ catalyst and a support, for the reduction of NOₓ in a gas mixture which at least partially results in increased activity, selectivity and/or durability. The object of the invention further extends to a catalyst article prepared by the method and to the use of the catalyst article for the selective reduction of NOₓ.

### BRIEF DESCRIPTION OF FIGURES

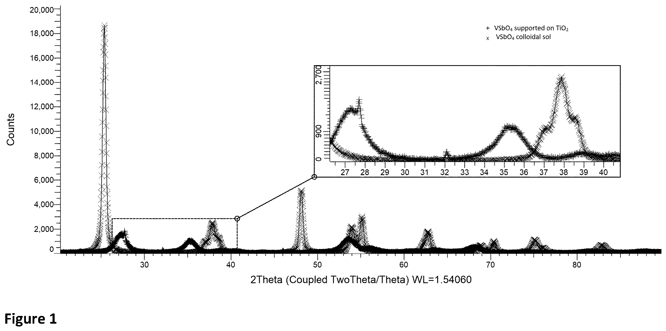

**Figure 1** shows rutile VSbO₄ as the only crystalline phase present after preparing a slurry comprising vanadium (V), antimony (Sb) and a reactive media to form a colloidal sol of VSbO₄ ("X" in the Figure). Figure 1 also shows an amorphous form of VSbO₄ supported on a titania support ("+" in the Figure).

### DETAILED DESCRIPTION

According to the present invention there is provided a method for producing a catalyst for the selective catalytic reduction of NOₓ in a gas mixture, the method comprising the steps of:
(a) preparing a slurry comprising vanadium (V), antimony (Sb) and a reactive media to form a colloidal sol of VSbO₄;
(b) combining the colloidal sol of VSbO₄ with a catalyst support material into a mixture; and
(c) optionally drying and calcining the resulting mixture.

The reactive media used in the method of the invention may be selected from the list comprising hydrogen peroxide, inorganic peroxides, metal chlorates, chlorites, perchlorates, hypochlorites, metal bromates, hypobromates, perbromates, bromites, ozone, peroxydisulfuric acid, metal salts of peroxydisulfate, nitric acid or metal nitrates.

In a preferred form of the invention the reactive media is hydrogen peroxide.

In an embodiment of the invention the molar ratio of the reactive media to V is between 1-10, preferably from 2-6, e.g. 4, 4.5 or 5. In a particularly preferred embodiment, the reactive media is hydrogen peroxide and the molar ratio of hydrogen peroxide to V is between 1-10, preferably from 2-6, e.g., 4, 4.5 or 5.

It will be appreciated by those skilled in the art that precursors of V and Sb may be used to form an oxide thereof under oxidation or otherwise. Accordingly, and in a preferred form of the invention, the step of preparing a slurry comprises mixing a source of V, preferably an oxide of V, more preferably V₂O₅ with the reactive material and thereafter adding and a source of Sb, preferably an oxide of Sb, more preferably Sb₂O₃, to form the colloidal sol.

The precursor of vanadium may be selected from the group comprising (e.g. consisting essentially of or consisting of) ammonium vanadate, vanadyl oxalate, vanadium pentoxide, vanadium monoethanolamine, vanadium chloride, vanadium trichloride oxide, vanadyl sulfate and vanadium antimonate.

The precursor of antimony may be selected from the group comprising (e.g. consisting essentially of or consisting of) antimony acetate, ethylene glycol antimony, antimony sulfate, antimony nitrate, antimony chloride, antimony sulfide, antimony oxide and antimony vanadate.

In one embodiment, the slurry can be prepared by mixing V₂O₅ and the reactive media to form a first slurry; and subsequently adding Sb₂O₃ to the first slurry. In a particularly preferred embodiment, the slurry can be prepared by mixing V₂O₅ and H₂O₂ to form a first slurry; and subsequently adding Sb₂O₃ to the first slurry.

In an alternative embodiment, the slurry can be prepared by mixing V₂O₅, Sb₂O₃ and the reactive media in a single step, e.g., the slurry can be prepared by V₂O₅, Sb₂O₃ and H₂O₂ in a single step.

In an embodiment of the invention, the molar ratio of H₂O₂:V in the slurry is about 1 to 10, preferably from about 2-6. In a preferred form of the invention the molar ratio is about 4.5.

The molar ratio of V:Sb in the slurry can be from about 1:1 to 1:10, preferably from 1:1 to 1:4, e.g. from 1:1 to 1:2.

For purposes of this specification, the term "about" means approximately and refers to a range that is optionally ± 25%, preferably ± 10%, more preferably, ± 5%, or most preferably ± 1% of the value with which the term is associated.

In an embodiment of the invention, the colloidal sol of VSbO₄ is optionally filtered prior to being combined with the catalyst support material to form a mixture.

In an alternative embodiment of the invention, the colloidal sol of VSbO₄ is not filtered prior to being combined with the catalyst support material to form a mixture. In one embodiment the colloidal sol of VSbO₄ is used directly and combined with the catalyst support material to form a mixture. In an alternative embodiment, the colloidal sol of VSbO₄ is diluted (e.g., diluted with water) and combined with the catalyst support material to form a mixture.

The step of combining the colloidal sol of VSbO₄ entails depositing the colloidal sol of VSbO₄ on the catalyst support material. The colloidal sol of VSbO₄ may be added to the catalyst support material as a washcoat or as an extrusion paste containing the catalyst support material.

In a preferred form of the invention, the catalyst support material is titanium dioxide (TiO₂).

In one form of the method of the invention, the steps of drying and calcining the mixture are performed at a temperature of about 400 °C to about 600 °C, preferably between 450 °C and 550 °C, more preferably at about 500 °C.

In an alternate embodiment of the invention, the slurry comprising V, Sb and the reactive media may additionally comprise one or more dopants. The dopant may preferably be selected from the group comprising (e.g. consisting essentially of or consisting of) Ti, Zr, Hf, Nb, Ta, Cr, Mo, W, Fe, Sn and P. In a preferred embodiment, the dopant is selected from the group comprising (e.g. consisting essentially of or consisting of) Ti, Zr, Mo, Fe, W, Nb, Ta and Sn.

According to the method of the invention, a catalyst is produced thereby, wherein the catalyst comprises V in an amount of 0.5-1.5wt%, preferably from 1 to 1.2 wt%, e.g. about 0.87 wt%.

According to the method of the invention, a catalyst is produced thereby, wherein the catalyst comprises Sb in an amount of 2-10wt%, preferably from 3 to 8 wt% or from 4 to 6 wt%, e.g. about 5.55 wt%.

According to a second embodiment of the invention, there is provided a catalyst for the selective catalytic reduction of NOₓ in a gas mixture, wherein the catalyst is produced according to the method as hereinbefore described.

In a third embodiment of the invention there is provided a catalyst article produced according to the method as hereinbefore described to selectively reduce NOₓ in a gas mixture.

In accordance with a fourth aspect of the invention there is provided a catalyst comprising a catalyst supported on a titania support, wherein said catalyst is VSbO₄ in an amorphous form. By "amorphous form", it is meant that when X-ray diffraction is performed on the sample, no crystalline structure is observed, as demonstrated in Figure 1. The pattern shown by the VSbO₄ colloidal sol ("X" in Figure 1) shows a clear crystal pattern demonstrating a rutile structure. When the VSbO₄ is supported on TiO₂ ("+" in Figure 1), the rutile crystal pattern is not observed, indicating that the VSbO₄ is present in an amorphous form. Without being bound by theory, it is thought that some Sb could be being dissolved into the TiO₂, which decomposes the VSbO₄ particles but retains enough Sb to promote V activity.

### EXAMPLES

### Example 1- Preparation of Catalyst A

Colloidal VSbO₄ was prepared as described in US4784979 and J. Catal., 230, 317 (2005) by Standard Oil (later BP). V₂O₅ was reacted with 30 vol% H₂O₂ to form a V peroxy solution. To this was added solid Sb₂O₃ and the mixture form a colloidal VSbO₄ slurry.

The slurry was filtered, re-slurried and filtered again to form a supernatant. The supernatant was added to TiO₂ and stirred at room temperature for 1 hour, followed by heating to 55°C for 2 hours to form a second slurry. The resulting second slurry was allowed to settle and formed a supernatant and precipitate. This was filtered, dried and calcined at 500°C for 2 hours to form a VSbO_{4/}TiO₂ sample (Catalyst A).

In addition, a portion of the colloidal VSbO₄ slurry was also directly calcined at 500°C in 2 hrs. XRD of this showed rutile VSbO₄ as the only crystalline phase present (see Figure 1).

### Example 2 - Preparation of Catalyst B (comparative)

VSb/TiO₂ was prepared by mixing V oxalate and Sb acetate (dissolved in tartaric acid) and added to TiO₂ through incipient wet impregnation. This formed a catalyst comprising 2wt% V and 2wt%Sb.

### Example 3 - Preparation of Catalyst C (comparative)

VSb/TiO₂ was prepared by mixing V oxalate and Sb acetate (dissolved in tartaric acid) and added to TiO₂ through incipient wet impregnation. This formed a catalyst comprising 2wt% V and 4wt%Sb.

### Example 4 - SCR data

Catalyst A and Catalyst B were submitted to SCR testing:
Catalyst A was 1 wt% VSbO₄/TiO₂
Catalyst B was 2 wt% VSb/TiO₂ (2wt% Sb)
Catalyst C was 2 wt% VSb/TiO₂ (4wt% Sb)

The powder catalysts were pelletised and tested fresh or aged using transient testing protocol (SV=60K/h) the samples were heated to 150°C and exposed to 500 ppm NOx, 550 ppm NH₃, 10 %O₂, 5 % H₂O, 300 ppm CO, 8% CO₂, balance N₂. The temperature was ramped at 10°C/min to 550°C.

**Table 1:**

| Catalyst | Temperature (°C) to get 20% of NOx conversion | Temperature (°C) to get 50% of NOx conversion |
|---|---|---|
| Catalyst A fresh | 223 | 259 |
| Catalyst A aged | 205 | 235 |
| Catalyst B fresh | 212 | 246 |
| Catalyst B aged | 205 | 235 |
| Catalyst C fresh | 212 | 246 |
| Catalyst Caged | 205 | 235 |

The initial (fresh) testing of Catalyst A (1wt% VSbO)ₓ/TiO₂) under SCR conditions showed slightly lower activity than Catalyst B and C. On ageing (580°C, 100 hrs) the activity of Catalyst A was improved such that it matched that of Catalyst B and C. This shows that Catalyst A has comparable activity to the catalysts with half the V loading.

## Claims

1. A method for producing a catalyst for the selective catalytic reduction of NOₓ in a gas mixture, the method comprising the steps of:
(a) preparing a slurry comprising vanadium (V), antimony (Sb) and a reactive media to form a colloidal sol of VSbO₄;
(b) combining the colloidal sol of VSbO₄ with a catalyst support material to form a mixture; and
(c) optionally drying and calcining the resulting mixture.

2. The method of claim 1, wherein the reactive media is hydrogen peroxide.

3. The method of claim 1 or claim 2, wherein the step of preparing a slurry comprises mixing an oxide of V, preferably V₂O₅ and an oxide of Sb, preferably Sb₂O₃.

4. The method of any preceding claim, wherein the slurry is prepared by mixing V₂O₅ and H₂O₂ to form a first slurry; and subsequently adding Sb₂O₃ to the first slurry.

5. The method of claim 4, wherein the molar ratio of H₂O₂:V in the slurry is about 1 to 10, preferably from about 2-6, e.g., about 4.5.

6. The method of claim 4 or claim 5, wherein the molar ratio of V:Sb in the slurry is from about 1:1 to 1:10, preferably from 1:1 to 1:4, e.g. from 1:1 to 1:2.

7. The method of any preceding claim, wherein said colloidal sol of VSbO₄ is filtered prior to being combined with the catalyst support material.

8. The method of any preceding claim, wherein the step of combining the colloidal sol of VSbO₄ is prepared by depositing the colloidal sol of VSbO₄ on the catalyst support material.

9. The method of any one of claims 1 to 7, wherein the step of combining the colloidal sol of VSbO₄ is prepared by adding the colloidal sol of VSbO₄ to a washcoat or extrusion paste containing the catalyst support material.

10. The method of any preceding claim, wherein the catalyst support material is titanium dioxide (TiO₂).

11. The method of any preceding claim, wherein the slurry comprising V, Sb and the reactive media additionally comprises a dopant, preferably wherein said dopant is selected from the group comprising Ti, Zr, Hf, Nb, Ta, Cr, Mo, W, Fe, Sn and P.

12. The method of any preceding claim, wherein the catalyst comprises V in an amount of 0.5-1.5wt%, preferably about 0.87 wt% and Sb in an amount of 2-10wt%, preferably about 5.55 wt%.

13. A catalyst for the selective catalytic reduction of NOₓ in a gas mixture, wherein the catalyst is produced according to the method of any preceding claim.

14. Use of a catalyst article produced according to the method of any one of claims 1 to 12 to selectively reduce NOₓ in a gas mixture.

15. A catalyst comprising a catalyst supported on a titania support, wherein said catalyst is VSbO₄ in an amorphous form.
